(19) **Europäisches Patentamt / European Patent Office / Office européen des brevets**

(11) **EP 3 984 846 B1**

(12) **FASCICULE DE BREVET EUROPEEN**

(45) Date de publication et mention
de la délivrance du brevet:
**24.04.2024 Bulletin 2024/17**

(21) Numéro de dépôt: **21200694.4**

(22) Date de dépôt: **04.10.2021**

(51) Classification Internationale des Brevets (IPC):
**B60W 20/16** (2016.01) **B60W 30/188** (2012.01)
**B60W 50/00** (2006.01)

(52) Classification Coopérative des Brevets (CPC):
**B60W 20/16; B60W 30/188; B60W 50/0097;**
B60W 2050/0031; B60W 2050/0075;
B60W 2556/10; B60W 2720/103

(54) **PROCEDE POUR DETERMINER UN PROFIL DE VITESSE MINIMISANT LES EMISSIONS POLLUANTES D'UN VEHICULE**

VERFAHREN ZUM BESTIMMEN EINES GESCHWINDIGKEITSPROFILS, DAS DIE
SCHADSTOFFEMISSIONEN EINES FAHRZEUGS MINIMIERT

METHOD FOR DETERMINING A SPEED PROFILE FOR MINIMISING THE POLLUTING EMISSIONS
OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2020 FR 2010614**

(43) Date de publication de la demande:
**20.04.2022 Bulletin 2022/16**

(73) Titulaire: **IFP Energies nouvelles
92500 Rueil-Malmaison (FR)**

(72) Inventeurs:
• **DOLLAR, Robert Austin
Clemson 29631 (US)**

• **SCIARRETTA, Antonio
92852 Rueil-Malmaison Cedex (FR)**
• **THIBAULT, Laurent
92852 Rueil-Malmaison Cedex (FR)**
• **LARAKI, Mohamed
92852 Rueil-Malmaison Cedex (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 2 703 209      EP-A1- 3 462 404
WO-A1-2010/081836      WO-A1-2017/051026**

## Description

### Domaine technique

La présente invention concerne de manière générale le domaine de l'éco-conduite, et plus particulièrement le domaine de la réduction des émissions de polluants liées à la mobilité d'un véhicule.

Les émissions liées au trafic routier comme les NOx constituent un danger pour la santé et pour l'environnement. Sa contribution dans plusieurs phénomènes nocifs, comme les pluies acides, peuvent amener à des complications sévères pour la santé, des dommages matériels et des problèmes agricoles. Si certains NOx sont produits naturellement par la foudre, les moteurs à combustion utilisés dans les véhicules routiers en produisent également lorsque l'azote et l'oxygène du cylindre sont exposés à une température élevée. Cela a amené les constructeurs automobiles à l'adoption de convertisseurs catalytiques à trois voies pour les moteurs à essence et de la réduction catalytique sélective (SCR) pour les véhicules diesels récents. Toutefois, pour un même véhicule, les niveaux d'émissions peuvent varier du simple au triple selon le style de conduite et le parcours (circulation, pente ...). Ainsi, les conditions d'utilisation d'un véhicule ont un impact important sur les émissions polluantes.

Dans ce contexte où les préoccupations environnementales et économiques s'accroissent de plus en plus, l'accent a été mis sur l'amélioration des conditions de fonctionnement des véhicules. Dans cette catégorie, l'éco-conduite, qui désigne l'amélioration de l'efficacité énergétique et environnementale de la conduite, peut jouer un rôle très important dans la réduction de la consommation énergétique et des émissions polluantes. Cela est d'autant plus intéressant avec un réseau routier de plus en plus connecté. Les futurs véhicules automatisés pourraient faire un usage précis de l'éco-conduite pour économiser jusqu'à 15% de l'énergie. Même les véhicules classiques peuvent bénéficier de l'éco-conduite. Cela consiste à suggérer au conducteur une trajectoire de vitesse à l'aide d'un appareil mobile ou d'un système d'info-divertissement du véhicule.

Bien qu'il existe un grand nombre de recherches sur les techniques d'éco-conduite visant à réduire la consommation de carburant et les émissions de gaz à effet de serre véhicules, les solutions pour réduire les polluants atmosphérique comme les NOx sont peu étudiées. Malheureusement, les émissions NOx ne suivent pas nécessairement la tendance de la consommation de carburant comme le font les émissions de dioxyde de carbone ($CO_2$). Pire, les conseils standards d'éco-conduite consistant à accélérer fortement puis maintenir sa vitesse entrainent des surémissions importantes. Ainsi, Les points de fonctionnement du moteur à forte puissance, qui sont les meilleurs pour la consommation énergétique, sont les pires pour les polluants, notamment pour les NOx mais également pour le monoxyde de carbone et pour les particules.

### Technique antérieure

Les documents suivants seront cités au cours de la description :

[1] Huang, Yuhan, et al. "Eco-driving technology for sustainable road transport: A review." Renewable and Sustainable Energy Reviews 93 (2018): 596-609.

[2] Mensing, Félicitas, et al. "Eco-driving: An économie or ecologic driving style?." Transportation Research Part C: Emerging Technologies 38 (2014): 110-121.

[3] Johansson, Hakan, et al. "Impact of EcoDriving on émissions." International Scientific Symposium on Transport and Air Pollution, Avignon, France. 2003.

[4] Liu, Jun, K. Kockelman, and Aqshems Nichols. "Anticipating the émissions impacts of smoother driving by connected and autonomous vehicles, using the moves model." Transportation Research Board 96th Annual Meeting. 2017.

[5] Stern, Raphael E., et al. "Quantifying air quality benefits resulting from few autonomous vehicles stabilizing traffic." Transportation Research Part D: Transport and Environment 67 (2019): 351-365.

[6] Thibault, L., Degeilh, P., Lepreux, O., Voise, L., Alix, G., and Corde, G. (2016). A new GPS-based method to estimate real driving émissions. IEEE 19th International Conférence on Intelligent Transportation Systems (ITSC) (pp. 1628-1633).

Afin de réduire la consommation énergétique et les émissions polluantes des véhicules, plusieurs approches ont été proposées au cours des dernières années. On peut les décomposer en plusieurs familles :

- les méthodes visant à réduire les distances parcourues par les véhicules
- les méthodes visant à augmenter le nombre de passager par véhicule (covoiturage...)
- l'amélioration de l'efficacité des véhicules par de nouvelles technologies
- l'amélioration des conditions de fonctionnement des véhicules actuels

Dans cette dernière catégorie, l'éco-conduite, qui désigne l'amélioration de l'efficacité énergétique et environnementale de la conduite peut permettre des gains significatifs et commence à prendre de plus en plus d'importance auprès des décideurs politiques et de la communauté scientifique. L'éco-conduite peut inclure plusieurs stratégies allant de l'application d'une vitesse constante à la réduction des accélérations et du temps d'arrêt. Un choix de route optimal peut aussi jouer un rôle dans la réduction de la distance parcourue et donc des émissions polluantes associées. Globalement une réduction de 10% à 15% de la consommation énergétique peut être atteinte grâce à l'éco-conduite. Ces gains ont été mesurés soit dans des conditions expérimentales, ou en simulation. Toutefois, la majorité des articles de la littérature abordent la thématique d'éco-conduite en ayant comme seul objectif la réduction de la consommation sans tenir compte des émissions autre que le CO2 (cf. par exemple la référence [1]). Plusieurs études, comme la référence [2], montrent qu'il y a un compromis à trouver entre la réduction de la consommation et celle des émissions polluantes associées. Dans la référence [3], l'auteur mesure la consommation de carburant et les émissions de 16 conducteurs d'essai qui ont été formés à l'éco-conduite. Il constate qu'en raison d'une utilisation plus importante du moteur sur des points de forte puissance, certaines émissions polluantes augmentent. Ainsi, une réduction des polluants, NOx par exemple, doit être considérées comme un des objectifs de l'éco-conduite. Peu d'articles scientifiques ont toutefois abordé cette problématique.

On connait la référence [4] qui décrit une approche de lissage des profils de vitesse avec des fonctions splines apportant une réduction de 15% des émissions NOx. Toutefois, l'étude et l'application de cette approche sont limités aux véhicules autonomes et le profil de vitesse obtenu n'est pas optimal.

Dans la référence [5], on évalue l'effet d'un lissage du trafic routier sur la qualité de l'air grâce au contrôle de certains véhicules autonomes. La réduction des émissions polluantes n'est toutefois qu'une conséquence plutôt qu'un objectif du contrôleur.

On connait aussi le document FR 2 994 923 A1 de la Demanderesse qui porte sur un procédé de détermination d'un indicateur énergétique d'un déplacement d'un véhicule et la détermination d'une vitesse optimale qui minimise la consommation énergétique, et de ce fait les émissions de $CO_2$. Toutefois, il n'est pas décrit de manière explicite dans ce document la détermination d'un profil de vitesse optimisé pour réduire les émissions d'autres polluants tels que les NOx.

On connait en outre le document US 2015057906 A1 qui concerne un système et un procédé pour déterminer des indications en temps réel permettant de réduire la consommation énergétique d'un véhicule, tels que des indications sur la vitesse, un taux d'accélération ou de décélération, un changement de vitesse. Ce document ne suggère donc pas la prise en compte de la réduction des émissions polluantes dans l'objectif d'éco-conduite. De plus, la solution proposée est basée sur des considérations heuristiques qui sont souvent sous-optimales.

On connait aussi le document BE 1019390 A1 qui concerne un système autonome de formation continue a l'éco-conduite en temps réel. Toutefois, ce document ne décrit pas la prise en compte de la réduction des émissions polluantes dans l'objectif d'éco-conduite. De plus, l'assistance proposée est basée uniquement sur une évaluation des niveaux d'accélération.

On connait en outre le document CN 105539448 A qui concerne un système pour optimiser la consommation énergétique, en fonction des conditions de trafic et des données de conduite en temps réel. Toutefois ce document ne décrit pas de manière explicite une minimisation des émissions polluantes dans l'objectif d'éco-conduite. De plus, la solution proposée est exprimée en termes de consommation optimale, ce qui n'est pas un indicateur facilement interprétable pour un conducteur pour modifier sa conduite.

On connait aussi la demande de brevet française FR 3049653 A1 de la Demanderesse, portant sur un procédé et un système de détermination des émissions de polluants d'un véhicule au moyen de paramètres macroscopiques. Toutefois, dans ce document, il n'est pas décrit la détermination d'un profil de vitesse optimisé spécifiquement pour minimiser les émissions de polluants.

On connait aussi la demande WO 2017/0510026 A1, qui décrit un procédé et un système embarqué permettant de déterminer une stratégie de roulage optimale à adopter par un véhicule automobile lorsque celui-ci approche d'un feu tricolore.

La présente invention vise à pallier ces inconvénients. Notamment, la présente invention concerne un procédé pour déterminer un profil de vitesse d'un véhicule permettant de réduire les émissions polluantes comme le $CO_2$, les NOx, ou autre. Le profil de vitesse selon l'invention peut être généré en temps réel et peut prendre en considération les conditions du trafic routier. Dans un contexte d'éco-conduite, le profil de vitesse optimisé selon l'invention peut être communiqué au conducteur, en temps réel ou a posteriori. Le profil de vitesse optimisé peut également être exploité pour piloter directement la trajectoire de vitesse d'un véhicule autonome.

## Résumé de l'invention

L'invention concerne un procédé pour déterminer un profil de vitesse permettant de minimiser les émissions d'au moins un polluant générées par un véhicule au cours d'un déplacement, selon la revendication 1.

Selon une mise en oeuvre de l'invention, l'un desdits modèles de profil de vitesse peut être décomposé en quatre phases comportant lesdits modes d'accélération successifs suivants : une accélération de traction maximale d'un fonctionnement basse émission de polluants dudit moteur dudit véhicule, une accélération de traction égale aux efforts résistifs, une accélération de traction nulle, une accélération de traction correspondant au freinage maximal du véhicule.

Selon une autre mise en oeuvre de l'invention, l'un desdits modèles de profil de vitesse peut être décomposé en cinq phases comportant les modes d'accélération successifs suivants : une accélération de traction maximale d'un fonctionnement basse émission de polluants dudit moteur dudit véhicule, une accélération de traction égale aux efforts résistifs, une accélération de traction maximale d'un fonctionnement basse émission de polluants dudit moteur dudit véhicule, une accélération de traction égale aux efforts résistifs, une accélération de traction nulle.

Alternativement, l'un desdits modèles de profil de vitesse peut être décomposé en cinq phases comportant les modes d'accélération successifs suivants : une accélération de traction maximale du véhicule, une accélération de traction maximale d'un fonctionnement basse émission de polluants dudit moteur dudit véhicule, une accélération de traction égale aux efforts résistifs, une accélération de traction nulle, une accélération de traction correspondant au freinage maximal du véhicule.

Selon une mise en oeuvre de l'invention, ledit procédé peut être mis en oeuvre en temps réel et ladite portion dudit déplacement peut correspondre à une partie dudit déplacement non encore effectuée par ledit véhicule.

Selon une mise en oeuvre de l'invention, on peut en outre, à l'issue de l'étape c), afficher ledit profil de vitesse minimisant lesdites émissions d'au moins un desdits polluants et/ou commander ledit véhicule en fonction dudit profil de vitesse minimisant lesdites émissions d'au moins un desdits polluants.

Selon une mise en oeuvre de l'invention dans laquelle ladite portion dudit déplacement a déjà été effectuée par ledit véhicule, on peut, à partir de ladite mesure de ladite vitesse et de ladite localisation dudit véhicule pendant ladite portion dudit déplacement, déterminer un profil de vitesse réalisé par ledit véhicule, et on peut déterminer un indicateur quantifiant un écart entre ledit profil de vitesse minimisant lesdites émissions dudit au moins un polluant et ledit profil de vitesse réalisé par ledit véhicule.

## Liste des figures

D'autres caractéristiques et avantages du procédé selon l'invention, apparaîtront à la lecture de la description ci-après d'exemples non limitatifs de réalisations, en se référant aux figures annexées et décrites ci-après.

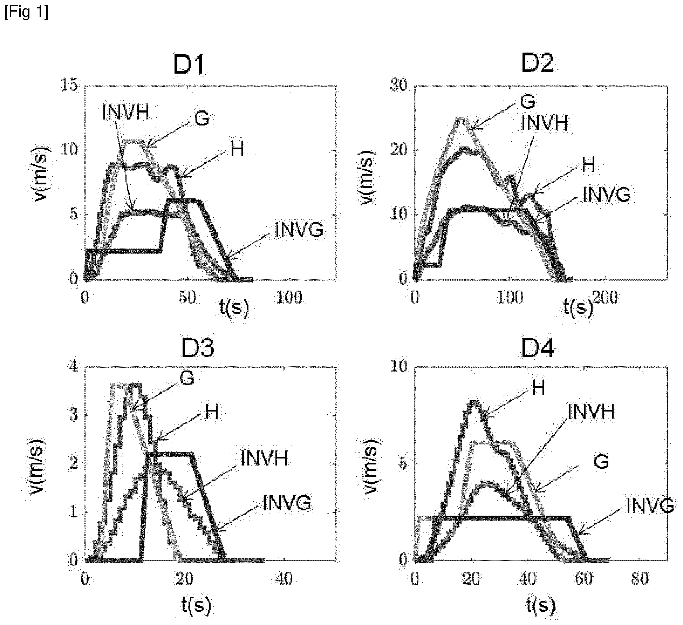

La figure 1 présente des profils de vitesse déterminés par une mise en oeuvre du procédé selon l'invention appliqué à quatre déplacements, comparés à des profils de vitesse selon l'art antérieur déterminés pour chacun de ces quatre déplacements et à des profils de vitesse d'un conducteur pour ces quatre déplacements.

## Description des modes de réalisation

Le procédé selon l'invention permet de déterminer un profil de vitesse minimisant les émissions d'au moins un polluant générées par le déplacement d'un véhicule.

Le procédé selon l'invention peut être utilisé pour les véhicules automobiles. Toutefois, il peut être utilisé dans le domaine du transport routier, le domaine des deux-roues, le domaine ferroviaire, le domaine naval, le domaine aéronautique, le domaine des aéroglisseurs, et le domaine des véhicules amphibies, etc. De manière générale, le véhicule selon l'invention est un véhicule motorisé.

Selon l'invention, le terme « polluant » désigne les oxydes d'azote (NOx), les particules fines, les monoxydes de carbone (CO), les hydrocarbures non brûlés (HC), le dioxyde de soufre, ainsi que le $CO_2$ et autres gaz à effet de serre. Le procédé selon l'invention s'applique avantageusement pour les NOx.

Le procédé selon l'invention permet de minimiser les émissions d'au moins un, avantageusement plusieurs, et de préférence tous, de ces polluants.

Le véhicule motorisé selon l'invention comporte un moteur à combustion interne (ci-après désigné par le terme « moteur »). Le moteur à combustion interne peut être un moteur essence ou un moteur Diesel. Le moteur peut réaliser à lui seul le déplacement du véhicule, ou peut faire partie d'un système de propulsion hybride.

Selon une première variante principale de l'invention, le procédé peut être appliqué en temps réel, à partir de mesures réalisées à un instant t du déplacement du véhicule, et pour déterminer un profil de vitesse minimisant les émissions d'au moins un polluant pour au moins une portion restante du déplacement du véhicule. Par portion restante du déplacement du véhicule, on entend au moins une partie du déplacement du véhicule qui n'a pas encore été effectuée par le véhicule. Selon cette variante, une portion restante du déplacement peut être la portion de déplacement à parcourir par le véhicule entre l'instant présent (ou instant actuel) noté instant t, et au moins un instant futur, noté instant $t + \Delta t$, du déplacement. Selon cette variante de l'invention, $\Delta t$ peut varier de la seconde à plusieurs heures. Ainsi, la portion restante de déplacement peut être comprise entre la position actuelle à l'instant t et un instant $t + \Delta t$ très proche dans le temps de l'instant t (une seconde par exemple), et entre la position actuelle à l'instant t et jusqu'à la position de la destination finale.

Selon une deuxième variante principale de l'invention, le procédé peut être mis en oeuvre en temps réel pour déterminer un profil de vitesse minimisant les émissions d'au moins un polluant pour une portion de déplacement déjà réalisée par le véhicule. On peut alors parler de mise en oeuvre en temps réel du procédé pour une détermination a posteriori d'un profil de vitesse. Par exemple pour au moins une portion d'un déplacement entre deux événements de rupture passés (arrêt, forte décélération, changement de vitesse limite, etc.), à partir de mesures réalisées pour une succession de pas de temps échantillonnant la durée de cette portion de déplacement effectué par le véhicule, on détermine un profil de vitesse optimisé permettant de minimiser les émissions d'au moins un polluant pour cette portion de déplacement, tout en respectant la durée de déplacement pour cette portion.

Selon une troisième variante principale de l'invention, le procédé peut être mis en oeuvre en oeuvre a posteriori (c'est-à-dire après que la totalité du déplacement ait été réalisé par le véhicule), à partir de mesures réalisées pour une succession de pas de temps échantillonnant la durée totale du déplacement du véhicule, et pour déterminer un profil de vitesse optimisé permettant de minimiser les émissions d'au moins un polluant sur l'ensemble du déplacement réalisé par le véhicule, tout en respectant le temps de trajet.

Le procédé selon l'invention requiert de disposer d'informations relatives au véhicule, qu'on appelle par la suite "paramètres macroscopiques". On appelle paramètre macroscopique, une caractéristique générale relative au véhicule, son moteur ou son système de post-traitement. Il s'agit de paramètre constant pour un véhicule, correspondant à des données du constructeur du véhicule. Le paramètre est dit macroscopique car il est déterminé à l'échelle du véhicule, et il ne s'agit pas de paramètre microscopique qui peut être déterminé, comme par exemple dans la demande de brevet FR2984557 (US 2013/0158967), à l'échelle d'une maille représentant une petite portion de la chambre de combustion. Les paramètres macroscopiques permettent la construction de modèles macroscopiques représentatifs du véhicule.

Les paramètres macroscopiques peuvent être de trois types :

- des paramètres liés à la construction générale du véhicule (par exemple : masse du véhicule, transmission, ...)
- des paramètres liés à la motorisation (par exemple : le type d'injection, la cylindrée, le type de motorisation...), et
- des paramètres liés au système de post-traitement (par exemple : type de post-traitement).

Selon un mode de réalisation de l'invention, on peut acquérir au moins un paramètre macroscopique choisi parmi :

- le type de motorisation (essence, Diesel...),
- le niveau de norme d'homologation (Euro 1, Euro 2, ...) ,
- la cylindrée du moteur,
- le couple maximal et le régime du moteur associé,
- la puissance maximale et le régime du moteur associé,
- la masse du véhicule,
- le type de transmission du véhicule (type et constitution de boîte de vitesse,...),
- le type de système de post-traitement,
- le type du système d'injection,
- l'architecture de la boucle d'air (présence/absence d'une recirculation des gaz brûlés noté EGR, utilisation d'un turbocompresseur, d'une suralimentation...),
- les dimensions des roues, etc.

Selon une variante de réalisation, les paramètres macroscopiques peuvent être obtenus depuis une base de données, qui répertorie les différents véhicules en circulation. Par exemple, les paramètres macroscopiques peuvent être obtenus en indiquant le numéro d'immatriculation du véhicule, la base de données associant le numéro de plaque à sa conception (marque, modèle, motorisation...), et comprenant les paramètres macroscopiques du véhicule.

Alternativement, les paramètres macroscopiques peuvent être des données constructeurs renseignés par l'utilisateur, en particulier au moyen d'une interface (par exemple un téléphone intelligent ou un système de géolocalisation).

Le procédé selon l'invention requiert qu'un ensemble de modèles, relatif au véhicule considéré, soient générés préalablement à la détermination du profil de vitesse optimisé pour minimiser les émissions d'au moins un polluant. Plus précisément, selon l'invention, le procédé requiert au moins pour le véhicule considéré les modèles suivants :

- un modèle de la dynamique dudit véhicule fonction au moins d'une accélération de traction dudit véhicule ;
- un modèle analytique représentatif du débit des émissions d'au moins un polluant en sortie du véhicule, le modèle analytique étant fonction de la vitesse et de l'accélération de traction du véhicule ;
- au moins un modèle (ou encore un type) de profil de vitesse décomposé en au moins deux phases, chacune des phases du modèle de profil de vitesse correspondant à un mode d'accélération du véhicule et étant défini par une fonction analytique dépendant de la vitesse instantanée du véhicule et/ou de paramètres du véhicule, le nombre desdits modes d'accélération étant prédéfini et valant préférentiellement cinq.

Par accélération de traction, on entend la force de traction du moteur divisée par la masse du véhicule. L'accélération de traction est égale à la somme entre l'accélération totale du véhicule et l'accélération (positive) dues aux efforts résistifs. Ces efforts représentent les résistances au roulement et les pertes en frein moteur.

Le procédé selon l'invention est présenté ci-après en deux étapes : une première étape A) de génération de modèles, et une deuxième étape B) de détermination du profil de vitesse optimisé pour minimiser les émissions d'au moins un polluant, la première étape A) étant toutefois optionnelle. En effet, l'étape B) peut être mise en oeuvre et même répétée plusieurs fois à partir de modèles préalablement établis, par exemple mais non limitativement tels que décrits dans l'étape A) ci-dessous.

Les étapes A) et B) sont préférentiellement mises en oeuvre par des moyens informatiques : téléphone intelligent, et/ou serveur et/ou ordinateur.

## A) Génération de modèles relatifs au véhicule

Au cours de cette étape qui est optionnelle, on construit un modèle de la dynamique du véhicule considéré, un modèle analytique représentatif du débit des émissions du véhicule considéré, ainsi qu'au moins un modèle de profil de vitesse du véhicule considéré. Cette étape peut être mise en oeuvre avantageusement préalablement à l'étape B), une fois pour toute. Les modèles issus de cette étape sont propres au véhicule considéré, ou au moins au modèle de véhicule considéré.

### A.1) Construction d'un modèle de la dynamique du véhicule

Au cours de cette étape, on construit un modèle de la dynamique du véhicule fonction au moins d'une accélération de traction dudit véhicule.

De manière générale, un modèle de la dynamique du véhicule relie la position et/ou l'altitude et/ou la vitesse du véhicule au couple et au régime du moteur, au moyen d'au moins un paramètre macroscopique relatif au véhicule. Selon une mise en oeuvre de l'invention, pour construire le modèle de la dynamique du véhicule, on peut utiliser au moins un des paramètres macroscopiques suivants : masse du véhicule, puissance maximale et le régime du moteur associé, vitesse maximale, type de transmission....

Selon une mise en oeuvre de l'invention, on utilise une représentation d'état pour représenter la dynamique du véhicule. Une telle représentation est en effet adaptée à la formulation du problème d'optimisation qui sera décrit dans l'étape A.3) ci-dessous et visant à déterminer des modèles (ou encore des types) de profils de vitesse.

Selon une mise en oeuvre de l'invention, on utilise les équations en représentation d'états suivantes pour exprimer la dynamique du véhicule :

$$\dot{s} = v$$
$$\dot{v} = u - r(v) \qquad (2)$$

où :

- s est la trajectoire du véhicule ;
- v est la vitesse du véhicule, une entrée du modèle de la dynamique du véhicule
- $u$ est l'accélération de traction du véhicule définie ci-dessus. Comme cela sera décrit dans l'étape A.3) ci-dessous, $u$ peut aussi être une variable de contrôle du problème d'optimisation visant à déterminer des modèles (ou encore des types) de profils de vitesse.

Selon une mise en oeuvre de l'invention, l'accélération résistive r peut s'écrire sous la forme :

$$r(v) = a_r + c_r v^2 + r_e(i_g) \qquad (1)$$

où $a_r$ est la force de résistance au roulement divisée par la masse du véhicule, $c_r$ est la force de résistance aérodynamique divisée par la masse du véhicule, $r_e$ est la somme des forces résistives dans la transmission, et $i_g$ est le rapport de transmission. Selon une mise une mise en oeuvre préférée de l'invention, l'accélération résistive r peut être représentée par une constante $r_0$. Selon cette mise en oeuvre préférée de l'invention, on obtient la représentation d'état suivante pour le modèle dynamique:

$$\dot{v} = u - r_0 \qquad (3)$$

Selon une mise en oeuvre de l'invention, les changements de rapport peuvent ne pas être pris en compte et on représente ces changements de rapport suivant une loi fixe basée sur la vitesse du véhicule. Selon une mise en oeuvre de l'invention, on peut utiliser la loi précisée dans le tableau 1 qui présente le numéro du rapport de la boite de vitesse utilisé en fonction de la vitesse maximale, ainsi que le rapport de vitesse moteur/roue.

[Table 1]

| N° Rapport | Vitesse max (m/s) | Rapport de vitesse moteur/roue |
|---|---|---|
| 1 | 5.6944 | 12.635 |
| 2 | 10.5556 | 7.4314 |
| 3 | 15.0833 | 4.52 |
| 4 | 20.2778 | 3.2286 |
| 5 | 24.9444 | 2.5370 |
| 6 | Sans objet | 2.0416 |

## A.2) Construction d'un modèle analytique des émissions d'au moins un polluant

Au cours de cette étape, il s'agit de construire un modèle des émissions d'au moins un polluant, de préférence tous les polluants, générés par le véhicule.

De manière générale, la modélisation des polluants tient compte du modèle du moteur, via un paramètre macroscopique, et relie le régime et le couple du moteur aux émissions de polluants en sortie du moteur, au moyen d'au moins un paramètre macroscopique. On parle aussi communément de la construction d'un modèle de moteur.

Selon une mise en oeuvre de l'invention, pour construire le modèle du moteur on peut utiliser au moins un des paramètres macroscopiques suivants : la cylindrée, le type de motorisation, le couple et la puissance, l'architecture de la boucle d'air, la norme d'homologation du véhicule, etc.

Selon un mode de réalisation de l'invention, on peut construire le modèle du moteur par association d'un modèle énergétique et d'un modèle de polluants en sortie du moteur. Le modèle énergétique relie le couple et le régime du moteur à des débits et des températures de fluides mis en oeuvre dans le moteur à combustion (carburants, gaz à l'admission, gaz à l'échappement, éventuellement recirculation des gaz brûlés) au moyen d'au moins un paramètre macroscopique, par exemple la cylindrée, le type de motorisation, le couple et la puissance maximaux, l'architecture de la boucle d'air. Le modèle de polluants en sortie moteur relie des débits et des températures de fluides mis en oeuvre dans le moteur à combustion interne aux émissions de polluants en sortie du moteur, au moyen d'au moins un paramètre macroscopique, par exemple la norme d'homologation du véhicule, le type de motorisation, l'architecture de la boucle d'air.

Le modèle énergétique permet d'estimer les grandeurs physiques sur le point de fonctionnement courant (régime, couple). Il est paramétré en fonction de paramètres macroscopiques. Les grandeurs physiques estimées sont les débits et températures des fluides mis en oeuvre dans le moteur à combustion (carburants, gaz à l'admission, gaz à l'échappement, éventuellement recirculation des gaz brûlés).

Le modèle de polluants en sortie du moteur permet à partir de l'information du régime et du couple du moteur, et des estimations issues du modèle énergétique, d'estimer les émissions polluantes en sortie du moteur. Il peut être paramétré en fonction des caractéristiques générales du véhicule et du moteur : la norme d'homologation du véhicule, le type de motorisation, l'architecture de la boucle d'air, etc.

L'estimation des polluants en sortie moteur peut se faire en deux étapes :

- estimation des émissions en quasi-statique au moyen d'un modèle quasi-statique, et,
- estimation de l'impact des phénomènes transitoires au moyen d'un modèle transitoire.

Alternativement, l'estimation des polluants en sortie moteur peut se faire uniquement en une seule étape au moyen du modèle quasi-statique.

Estimer les émissions en quasi-statique d'un moteur sur un point de fonctionnement à un instant donné revient à considérer que ce moteur est en fonctionnement stabilisé sur ce point de fonctionnement.

L'estimation de l'impact des phénomènes transitoires (fonctionnement non stabilisé) permet de prendre en compte les phénomènes transitoires, qui engendrent généralement un surplus d'émissions polluantes.

Les modèles quasi-statiques de polluants peuvent être paramétrés au moyen de paramètres macroscopiques du véhicule et du moteur. Ils permettent à chaque instant d'estimer les émissions polluantes quasi-statiques en sortie moteur, à partir des estimations de régime et de couple du moteur thermique et des sorties du modèle énergétique. Les modèles quasi-statiques peuvent s'écrire sous la forme :

$$PSME_{i-QS} = f(Ne, Cme)$$

Avec $PSME_{i-QS}$ la quantité de polluants i en sortie du moteur en quasi-statique, $Ne$ le régime du moteur, $C_{me}$ le couple du moteur, La fonction f peut être de différent type, en fonction du type de polluant étudié.

Par exemple, le modèle quasi-statique de NOx peut être celui décrit dans le document (U. Gartner, G. Hohenberg, H. Daudel and H. Oelschlegel, Development and Application of a Semi-Empirical NOx Model to Various HD Diesel Engines), et peut s'écrire sous la forme :

$$\log(NOx_{QS}) = a_0 + a_1 * COC + a_2 * m_{cyl} + a_3 * m_{O2}.$$

Les coefficients $a_0$, $a_1$, $a_2$, as sont obtenus à partir de données expérimentales. Un des avantages de ce modèle est que ces coefficients varient peu d'un moteur à l'autre. Ce point est démontré dans l'article de Gartner précité.

Les particules en sortie du moteur résultent de la combinaison de deux phénomènes : la formation et la post-oxydation dans la chambre de combustion. Ces phénomènes sont au premier ordre influencés par la richesse, le régime, la quantité de carburant, et le taux de gaz brûlés. Ainsi, le modèle statique de particules en sortie du moteur peut s'écrire sous une équation de la forme :

$$Soot_{QS} = f(AF_{ratio}, Ne, Fuel, BGR).$$

La fonction f peut être déterminée par corrélation avec des données expérimentales.

Des modèles similaires peuvent être construits pour les autres polluants.

Pour le mode de réalisation, pour lequel on détermine l'impact des phénomènes transitoires, on peut mettre en oeuvre en outre les moyens décrits ci-dessous. Les phénomènes de dynamique de boucle d'air génèrent un écart sur les taux de BGR (fraction de gaz brûlés, liée à la recirculation des gaz d'échappement) et la richesse par rapport au point de fonctionnement stabilisé, ce qui a un impact fort sur les polluants, en particuliers les hydrocarbures HC, le monoxyde de carbone CO et particules. Les modèles d'impact du transitoire sont paramétrés en fonction de paramètres macroscopiques du moteur, en particulier des caractéristiques de la boucle d'air récupérées (atmosphérique/suralimentée, recirculation des gaz brûlés haute pression $EGR_{HP}$ / recirculation des gaz brûlés basse pression $EGR_{BP}$).

Ces modèles permettent d'estimer les fractions de gaz brûlés $BGR_{dyn}$ et richesses dynamiques $AF_{ratio-dyn}$ à partir des estimations quasi-statiques et de la variation du couple estimé :

$$BGR_{dyn} = f(BGR, Cme, dCme/dt)$$

$$AF_{ratio-dyn} = f(AF_{ratio}, Cme, dCme/dt).$$

Un coefficient de correction $Cor_{i-QS2TR}$ pour chaque polluant i peut être calculé en fonction de ces grandeurs dynamiques :

$$Cor_{i-QS2TR} = f(BGR_{dyn}, BGR, AF_{ratio-dyn}, AF_{ratio}).$$

Ces coefficients de correction permettent d'estimer les émissions polluantes en sortie moteur en prenant compte les phénomènes transitoires. Pour cela, les émissions du polluant i en sortie du moteur $PSME_i$ peuvent s'écrire par une formule du type :

$$PSME_i = Cor_{i-QS2TR} * PSME_{i-QS}.$$

Selon une mise en oeuvre particulière de l'invention, le modèle de moteur considéré est un modèle de moteur thermique Diesel suralimenté de 2.0 litres avec SCR, tel que décrit dans le document [6]. Ce modèle, connu sous l'appellation CES Lite, calcule d'abord le point de fonctionnement du moteur puis la consommation et les émissions polluantes (notamment les NOx, les particules et le monoxyde de carbone) à l'aide de cartographies quasi-statiques. Une dynamique du premier ordre modélise les systèmes EGR et SCR. Ce modèle de moteur présente l'avantage d'être relativement moins coûteux en temps de calcul que d'autres modèles, comme par exemple celui décrit dans le document EP 3440330 A1.

Avantageusement, à partir du modèle de moteur considéré, on peut déterminer une cartographie quasi-statique représentative du modèle de moteur en exécutant ce modèle pour une pluralité de valeurs pour chacune des entrées considérées de ce modèle, et on conserve les résultats pour chaque valeur dans une cartographie. On peut ainsi, dans la suite du procédé, utiliser la cartographie quasi-statique représentative du modèle de moteur ainsi déterminée au lieu du modèle de moteur lui-même, ce qui permet un gain important en temps de calcul. Cela contribue notamment à rendre réalisable une application en temps réel du procédé selon l'invention, y compris sur un Smartphone. Par ailleurs, la réduction du modèle de moteur à une cartographie quasi-statique permet de réduire le nombre d'état du système. Cette réduction d'état permet de diminuer exponentiellement le temps de calcul de la programmation dynamique et rajoute de la complexité à l'analyse selon le Principe du Minimum de Pontriaguine.

Selon une mise en oeuvre de l'invention, on exécute le modèle CES Lite décrit ci-dessus pour une pluralité de vitesses et d'accélérations constantes afin d'obtenir un débit stationnaire de polluants et notamment de NOx, et on enregistre la fonction résultante $\dot{p}(v, u)$ dans une cartographie.

Selon l'invention, on construit un modèle analytique représentatif du débit des émissions d'au moins un polluant en fonction de la vitesse du véhicule et de l'accélération de traction u.

En effet, le problème d'optimisation qui est décrit dans l'étape A.3) étant formulé comme une commande optimale, et étant analysé selon le Principe du Minimum de Pontriaguine tel que cela sera décrit ci-après, il est nécessaire d"avoir un modèle analytique représentatif du débit des émissions d'au moins un polluant en fonction de la vitesse du véhicule et de la variable de contrôle.

Selon une mise en oeuvre de l'invention, on détermine un modèle analytique du débit des émissions d'au moins un polluant $\dot{p}(v, u)$ du type modèle affin par morceaux de la forme suivante :

$$\dot{p} = \begin{cases} 0 & u \le 0 \\ a_0 + a_1 v_e + a_2 u + a_3 u v_e & u \le u_t(v_e) \\ b_0 + b_1 v_e + b_2 u + b_3 u v_e & u > u_t(v_e) \end{cases} \quad (4a)$$

$$v_e = \begin{cases} v_s & v \le v_s \\ v & v > v_s \end{cases} \quad (4b)$$

où a0, a1, a2, a3, b0, b1, b2, et b3 sont des coefficients d'ajustement de courbes (déterminés par exemple à partir d'une cartographie quasi-statique), et pour lequel la saturation de la vitesse véhicule relative au moteur $v_e$ à la vitesse de dérapage $v_s$ prend en compte le glissement de la chaine de traction à faibles vitesses quand le régime moteur est constant. Par ailleurs, le seuil d'accélération $u_t(v)$ est généré afin d'imposer la continuité entre la deuxième et la troisième équation de (4a). On obtient ainsi une première fonction rationnelle avec des coefficients dépendants de ceux de (4a), soit :

$$u_t(v_e) = \frac{p_1 v_e + p_2}{v_e + q_2} \quad (5a)$$

$$p_1 = \frac{b_1 - a_1}{a_3 - b_3}, \quad p_2 = \frac{b_0 - a_0}{a_3 - b_3}, \quad q_1 = \frac{a_2 - b_2}{a_3 - b_3} \qquad (5b)$$

On définit en outre une deuxième fonction rationnelle $u_w$ qui approxime l'accélération maximale du véhicule en fonction de la vitesse, soit :

$$u_w(v_e) = \begin{cases} \bar{u} & v_e \le v_w \\ \dfrac{w_1 v_e + w_2}{v_e + y_1} & v_e > v_w \end{cases} \qquad (6)$$

Ce modèle analytique présente l'avantage d'être très peu coûteux en temps de calcul et en mémoire, ce qui permet de l'exécuter sur un smartphone (téléphone intelligent), et non pas uniquement sur ordinateur, contrairement au modèle CES Lite précité. Ce modèle est donc apte à une application embarquée du procédé selon l'invention.

Avantageusement, on prend en compte le transitoire durant lequel le moteur est réactivé. Avec le moteur éteint, la boucle EGR basse pression est remplie d'air frais et nécessite du temps pour se remplir de gaz brûlés après la réactivation du moteur. Or cela produit des pics d'émissions de NOx. Avantageusement, on définit une pénalité en masse de NOx qui est appliquée à chaque réactivation du moteur lors de l'évaluation des résultats, qui peut s'écrire

$$x = \alpha_1 \left(\frac{N_e}{\alpha_2}\right)^{\alpha_3} \left(\alpha_4\left(\hat{\Theta}_{cyl} - \alpha_5\right)\right)^{\alpha_6(1 - \alpha_7 F_1)} \qquad (7)$$

$$\dot{p}_{ss} = \frac{M_p}{M_e} \dot{m}_e x_{ss}, \quad \dot{p}(t) = \frac{M_p}{M_e} \dot{m}_e x(t) \qquad (8)$$

dans lequel le terme $Ne$ correspond au régime moteur, $F_1$ à la richesse admission, $\Theta_{cyl}$ à la température maximale de combustion, $\dot{m}_e$ le débit massique des gaz à l'échappement, $M_e$ la masse molaire des gaz à l'échappement, $M_p$ la masse molaire du polluant considéré, et où les $\alpha_i$ sont des paramètres de calibration du modèles recalés sur des mesures expérimentales.

**A.3) Définition d'au moins un modèle de profil de vitesse**

Au cours de cette étape, on définit au moins un modèle de profil de vitesse du déplacement du véhicule.

On peut montrer de manière analytique que la résolution d'un problème d'optimisation visant à déterminer un profil de vitesse minimisant les émissions de polluants modélisées telles que décrit ci-dessus conduit à des profils de vitesse décomposés en au moins deux phases, chaque phase correspondant à un mode d'accélération donné du véhicule, et que ces modes d'accélération du véhicule sont en un nombre prédéfini, et de préférence au plus au nombre de cinq. Il n'est pas indispensable de réaliser cette résolution analytique pour la mise en oeuvre du procédé selon l'invention. Il suffit en effet pour l'invention de définir des modèles de profils de vitesse satisfaisant les conclusions de la résolution de ce problème d'optimisation. A titre informatif, le problème d'optimisation discuté ci-dessus peut être résolu selon la théorie de la commande optimale (connu sous l'acronyme OCP pour "Optimal Command Problem" en anglais) appliquée au modèle analytique d'émission d'au moins un polluant décrit ci-dessus et en tenant compte de contraintes, avec l'accélération de traction comme variable de contrôle du problème d'optimisation. Plus particulièrement, on peut appliquer le Principe du Minimum de Pontriaguine. On entend par « accélération de traction » la force de traction exercée par le groupe motopropulseur (pouvant comprendre notamment un moteur à combustion interne ou une machine électrique) du véhicule sur les roues du véhicule, divisée par la masse du véhicule.

Selon l'invention, un mode d'accélération du véhicule est défini par une fonction analytique dépendant de la vitesse instantanée du véhicule et/ou de paramètres du véhicule. Par ailleurs, selon l'invention, les modes d'accélération du véhicule sont en un nombre prédéfini. Selon un mode préféré de mise en oeuvre de l'invention, le nombre de modes d'accélération vaut cinq. Selon une mise en oeuvre préférée de l'invention, le mode d'accélération d'une phase donnée d'un modèle de profil de vitesse peut être choisi parmi :

- l'accélération de traction nulle, soit $u_{zero}$ = 0. On entend par « accélération de traction nulle » une accélération engendrée par une force de traction nulle du groupe motopropulseur du véhicule. Autrement dit, dans ce cas, le véhicule subit une décélération, égale aux efforts résistifs.
- l'accélération de traction correspondant aux efforts résistifs, soit $u_{res}$ = $r(v)$ avec $r(v)$ définie selon l'équation (1) ci-dessus), ce qui signifie que le véhicule reste à vitesse constante. On entend par « accélération de traction correspondant aux efforts résistifs » une accélération engendrée par une force de traction exercée par le groupe motopropulseur du véhicule égale (en valeur absolue) aux efforts résistifs (engendrés par le déplacement du véhicule). Autrement dit, dans ce cas, l'accélération subie par le véhicule est nulle.
- l'accélération de traction correspondant au freinage maximal du véhicule, soit $u_{braking}$ = $f(v)$ où f est une fonction caractéristique du véhicule et du moteur, ce qui signifie que l'accélération de traction est négative. Selon une mise en oeuvre de l'invention, on peut considérer cette accélération comme une constante. On entend par « accélération de traction correspondant au freinage maximal (en réalité à la force maximale de freinage) du véhicule » une accélération engendrée par une force de traction exercée par le groupe motopropulseur du véhicule égale (en valeur absolue) à la force maximale de freinage du véhicule. Autrement dit, dans ce cas, le véhicule subit une décélération maximale.
- l'accélération de traction $u_{NOx}$ correspond à l'accélération de traction maximale à ne pas dépasser pour rester dans la zone de fonctionnement basse émission de polluants (et notamment de NOx) du moteur. Au-delà de cette accélération les polluants augmentent exponentiellement. Dans certains cas, cette accélération peut correspondre à la valeur limite au-delà de laquelle l'utilisation de la technologie de recirculation des gaz brûlés (EGR) n'est plus possible. Selon une mise en oeuvre de l'invention, cette accélération peut être obtenue à partir de l'équation (5a)

$$u_{NOx} = \frac{p_1 v_e + p_2}{v_e + q_2}$$

ci-dessus, soit . On entend par « une accélération de traction maximale d'un fonctionnement basse émission de polluants du moteur du véhicule » une accélération engendrée par une force de traction exercée par le groupe motopropulseur du véhicule au-delà de laquelle les émissions de polluants (par le moteur à combustion interne du véhicule) augmentent exponentiellement (ou encore au-delà de laquelle l'utilisation de la technologie de recirculation des gaz brûlés n'est plus possible).

- l'accélération de traction maximale atteignable du véhicule, soit $u_{max}$ = $f'(v)$ où f' est une fonction caractéristique du véhicule et du moteur, qui peut être calculée à partir de la courbe de couple maximum du moteur, par exemple selon l'équation (6) ci-dessus. On entend par « accélération de traction maximale » une accélération engendrée par la force de traction maximale du groupe motopropulseur du véhicule. Autrement dit, dans ce cas, le véhicule subit une accélération maximale.

Selon l'invention, on cherche à déterminer un profil de vitesse minimisant les émissions de polluants, le profil de vitesse comportant au moins deux phases, chacune des phases correspondant à un mode d'accélération du véhicule, de préférence choisi parmi l'un des cinq modes d'accélération définis ci-dessus. Il s'agit donc de déterminer d'une part le nombre de phases, l'enchainement des phases les unes par rapport aux autres, ainsi que la durée de chacune des phases d'un profil de vitesse.

Ce problème inverse n'est pas inversible de manière analytique par rapport à ces paramètres. Ainsi, selon l'invention et comme cela sera décrit dans l'étape B.3) ci-dessous, on définit au moins un modèle de profil de vitesse, de préférence plusieurs modèles, et on évalue les émissions de polluants émises pour différentes durées des phases de chaque modèle, afin de sélectionner le profil de vitesse minimisant les émissions de polluants.

A ce stade de l'invention, on définit donc au moins un modèle de profil de vitesse, de préférence au moins deux, et très préférentiellement au moins trois modèles de profil de vitesse.

Selon un premier mode de réalisation de l'invention, on définit un modèle de profil de vitesse constitué des modes d'accélération suivants : $u_{NOx}$ (accélération de traction maximale de la zone de fonctionnement basse émission de polluants du moteur), $u_{res}$ (accélération de traction égale aux efforts résistifs), $u_{zero}$ (accélération de traction nulle), $u_{braking}$ (accélération de traction correspondant au freinage maximal du véhicule).

Selon un deuxième mode de réalisation de l'invention, on définit un modèle de profil de vitesse constitué des modes d'accélération suivants : $u_{NOx}$ (accélération de traction maximale de la zone de fonctionnement basse émission de polluants du moteur), $u_{res}$ (accélération de traction égale aux efforts résistifs), $u_{NOx}$ (accélération de traction maximale de la zone de fonctionnement basse émission de polluants du moteur), $u_{res}$ (accélération de traction égale aux efforts résistifs), $u_{zero}$ (accélération de traction nulle).

Selon un troisième mode de réalisation de l'invention, on définit un modèle de profil de vitesse constitué des modes d'accélération suivants : $u_{max}$ (accélération de traction maximale du véhicule), $u_{NOx}$ (accélération de traction maximale de la zone de fonctionnement basse émission de polluants du moteur), $u_{res}$ (accélération de traction égale aux efforts résistifs), $u_{zero}$ (accélération de traction nulle), $u_{braking}$ (accélération de traction correspondant au freinage maximal du véhicule).

A cette étape du procédé, un modèle de profil de vitesse est défini par un nombre de phases et un mode d'accélération pour chaque phase. Les durées des phases ne sont pas précisées à cette étape du procédé. Elles sont en effet optimisées ultérieurement, tel que cela est décrit en section B.3 ci-dessous.

## B. Détermination d'un profil de vitesse minimisant les polluants

Au cours de cette étape, il s'agit de déterminer un profil de vitesse minimisant les émissions d'au moins un polluant, pour au moins une portion d'un déplacement du véhicule considéré, à partir d'une information relative à la destination du véhicule.

Pour rappel, par portion du déplacement, on entend :

- pour la première variante principale de l'invention (mise en oeuvre du procédé et recommandation "en temps réel"), au moins une partie du déplacement qui n'a pas encore été réalisée par le véhicule, comme par exemple le reste du déplacement, c'est-à-dire la longueur de la trajectoire du véhicule entre la position en cours du véhicule et la position de la destination finale.
- pour la deuxième variante principale de l'invention (mise en oeuvre "en temps réel" du procédé et recommandation "a posteriori"), une partie du déplacement déjà réalisée par le véhicule et comprise entre deux points de rupture ("breakpoints" en anglais) du déplacement.
- pour la troisième variante principale de l'invention (mise en oeuvre et recommandation "a posteriori"), une partie ou la totalité du déplacement déjà réalisée par le véhicule.

### B.1) Mesure de la positon et de la vitesse instantanée

Au cours de cette étape, on mesure la position et la vitesse instantanée du véhicule pendant le déplacement du véhicule, de préférence pour au moins un pas de temps lors du déplacement du véhicule.

Selon la première variante principale de l'invention (mise en oeuvre du procédé et recommandation "en temps réel"), on mesure la position et la vitesse instantanée du véhicule pour au moins le pas de temps en cours du déplacement du véhicule. Avantageusement, on répète cette mesure tout au long du déplacement du véhicule, pour une pluralité de pas de temps échantillonnant la durée totale du déplacement du véhicule.

Selon la deuxième variante principale de l'invention (mise en oeuvre "en temps réel" du procédé et recommandation "a posteriori"), on réalise la mesure de la vitesse instantanée et de la position du véhicule pour au moins le pas de temps en cours du déplacement du véhicule. Avantageusement, on répète cette mesure tout au long du déplacement du véhicule, pour une pluralité de pas de temps échantillonnant la durée totale du déplacement du véhicule.

Selon la troisième variante principale de l'invention (mise en oeuvre du procédé et recommandation "a posteriori"), on réalise la mesure de la vitesse instantanée et de la position du véhicule tout au long du déplacement du véhicule, pour une pluralité de pas de temps échantillonnant la durée totale du déplacement du véhicule. Ainsi, selon cette troisième variante principale de l'invention, on réalise la mesure de la vitesse instantanée et de la position du véhicule pour au moins un pas de temps lors du déplacement du véhicule.

De manière générale, la mesure de la vitesse instantanée et de la position du véhicule peut être réalisée de manière régulière (pas de temps constant sur la durée du trajet) ou irrégulière (pas de temps variable sur la durée du trajet). Selon une mise en oeuvre de l'invention, on réalise une mesure de vitesse instantanée et de la position du véhicule au moins toutes les 10 secondes, de préférence toutes les 5 secondes, et de manière très préférée toutes les secondes. On obtient ainsi une pluralité de mesures de la vitesse instantanée et de la position du véhicule réalisées pour une pluralité de pas de temps.

De manière générale, la mesure de la position et de la vitesse instantanée du véhicule peut être réalisée à l'aide de tout système de géolocalisation, par exemple de type GPS (pour « global positioning system » signifiant géo-positionnement par satellite) ou de type Galileo, ou au moyen d'un téléphone intelligent (« smartphone ») out tout autre objet connecté, comme une montre connectée, etc.

Avantageusement, on détecte de manière automatique via un téléphone intelligent les déplacements en véhicules motorisés en maximisant la sensibilité de détection du début de chaque déplacement et la précision des données recueillies, tout en limitant la consommation de batterie de la fonction. Cette fonction ne nécessite pas l'utilisation permanente de la géolocalisation (GNSS). Elle se base sur l'observation des changements d'antenne GSM, et/ou sur l'identification du type d'activité de l'utilisateur, détaillé dans le bloc précédent. Lorsqu'un changement d'antenne est détecté ou que l'activité actuellement détectée est un déplacement en véhicule motorisé, voiture par exemple, le capteur GNSS du smartphone est activé pendant un temps donné. Si les mesures de vitesses enregistrées correspondent bien à une vitesse représentative d'un déplacement en véhicule motorisé (cas d'utilisation de véhicule motorisé) alors l'enregistrement d'un nouveau déplacement en véhicule motorisé est lancé et le GNSS reste activé jusqu'à la fin de celui-ci. La fin du déplacement est déterminée par une condition sur la vitesse. En fin de déplacement, les données enregistrées sont envoyées sur un serveur ou stockées en local pour un envoi ultérieur (au cas notamment où il y ait une absence de réseau en fin de trajet). Avantageusement, on prétraite les mesures de vitesse réalisées à partir d'un téléphone intelligent. Selon un mode de réalisation de l'invention, le prétraitement PRT peut comprendre un sur-échantillonnage des signaux, puis un filtrage.

**B.2) Détermination de paramètres du déplacement**

Au cours de cette étape, on détermine au moins la longueur, la durée, la vitesse initiale et la vitesse finale du véhicule pour au moins une portion du déplacement, à partir au moins de l'information sur la destination du véhicule, de la mesure de la position et de la vitesse instantanée du véhicule.

Selon une mise en oeuvre de l'invention, l'usager du véhicule peut renseigner la destination du véhicule.

A partir de la destination et de la position du véhicule actuelle mesurée à l'étape précédente, on détermine de manière classique un itinéraire du véhicule, par exemple par un algorithme de chemin le plus court respectant les limitations de vitesse en vigueur et/ou tenant compte de la congestion du trafic routier sur cet itinéraire, et optionnellement minimisant la consommation énergétique tel que décrit par exemple dans le document EP 3453583 A1. Pour une portion de déplacement prédéfinie, on peut ainsi en déduire la longueur de cette portion du déplacement, la durée du déplacement pour réaliser cette portion, la vitesse initiale (c'est-à-dire la vitesse au début de la portion de déplacement) et la vitesse finale (c'est-à-dire la vitesse à la fin de la portion de déplacement) du véhicule. Bien évidemment, dans une mise en oeuvre en temps réel du procédé selon l'invention (pour au moins les première et deuxième variantes principales de l'invention), ces paramètres relatifs à au moins une portion du déplacement du véhicule sont avantageusement mis à jour en temps réel.

**B.3) Détermination d'un profil de vitesse optimal**

Au cours de cette étape, pour chacun des modèles de profil de vitesse définis à l'étape A.3), on définit une pluralité de profils de vitesse respectant la longueur, la durée, la vitesse initiale et la vitesse finale déterminés pour la portion du déplacement considérée, les profils de vitesse d'un même modèle se distinguant uniquement par des durées de chacune des phases distinctes.

Puis, au moyen du modèle analytique défini à l'étape A.2) ci-dessus, pour chaque modèle de profil de vitesse, on détermine les émissions d'au moins un polluant pour chacun des profils de vitesse de la pluralité de profils de vitesse définis pour le modèle de vitesse considéré.

Et enfin, on sélectionne le profil de vitesse qui minimise les émissions d'au moins un polluant parmi l'ensemble des profils de vitesse qui ont été définis, c'est-à-dire que le profil de vitesse sélectionné in fine est celui, parmi chacun des pluralités de profils de vitesse définis pour chaque modèle de profil de vitesse, qui produit les émissions d'au moins un polluant les plus faibles. Autrement dit, on recherche à la fois la combinaison de modes d'accélération optimale, ainsi que la durée de chacune des phases de cette combinaison, mais tout en respectant la durée de la portion de déplacement qui est déterminée à l'étape précédente. Ainsi, le procédé selon l'invention ne modifie pas la durée d'un déplacement. La durée du déplacement est en effet une contrainte du procédé selon l'invention.

Avantageusement, on utilise le modèle analytique des émissions d'au moins un polluant défini par les équations (4a) et (4b) ci-dessus pour réaliser ces estimations des émissions de polluants pour une pluralité de profils de vitesse par modèle de vitesse, car ce modèle analytique est très peu coûteux en temps de calcul (de l'ordre de la seconde sur un Smartphone), ce qui permet de l'exécuter plusieurs fois tout en rendant possible une estimation en temps réel, y compris sur un Smartphone, d'une recommandation de profil de vitesse.

**B.4) Utilisation du profil de vitesse optimal**

Cette étape du procédé selon l'invention est optionnelle.

Selon une mise en oeuvre de l'invention, on affiche au moins une partie du profil de vitesse optimal déterminé à l'étape précédente, par exemple sur le tableau de bord du véhicule, sur un site internet ou sur un dispositif portatif autonome, tel qu'un appareil de géolocalisation ou un téléphone portable. L'affichage peut être en temps réel (par exemple dans les variantes principales 1 ou 2) ou a posteriori (par exemple dans les variantes principales 2 et 3). Selon une mise en oeuvre de l'invention, le profil de vitesse peut aussi être traduit sous forme de consignes de conduite. De manière générale, les informations affichées peuvent conduire le conducteur à adapter sa conduite, en fonction de ces informations.

Selon une mise en oeuvre de la première variante principale de l'invention, on commande en temps réel un véhicule, tel qu'un véhicule autonome, à partir du profil de vitesse optimal déterminé à l'étape précédente.

Selon une mise en oeuvre de l'invention, en particulier des variantes principales 2 et 3, on peut construire un indicateur à partir de la mesure de l'écart (par exemple au moyen d'une estimation d'une moyenne quadratique ("Root mean Square" en anglais) entre le profil de vitesse optimisé par le procédé selon l'invention et le profil de vitesse réellement effectué par le véhicule. Selon une mise en oeuvre de l'invention, cet indicateur peut être affiché, par exemple sur le tableau de bord du véhicule, sur un site internet ou sur un dispositif portatif autonome, tel qu'un appareil de géolocalisation ou un téléphone portable.

Ainsi, le procédé selon l'invention présente les avantages suivants :

- Minimisation (au sens mathématique) des émissions polluantes via le suivi d'un profil de vitesse cible
- Capacité à considérer différentes combinaisons d'émissions polluantes à réduire : CO2, NOx, CO...
- Exploitation de l'approche pour différents types de véhicules et de technologies,
- Génération en temps réel des profils optimaux,
- Prise en compte des conditions de trafic en temps réel pour la génération des profils de vitesse,
- Possibilité de traduire le profil de vitesse optimal en des consignes d'éco-conduite explicite pour le conducteur : par exemple "Accélérer moyennement"
- Possibilité d'exploiter le profil de vitesse déterminer pour contrôler la vitesse d'un véhicule autonome et ainsi garantir l'atteinte du profil de vitesse optimal (sans avoir de biais induit par le conducteur)
- Le procédé selon l'invention peut être intégrée dans un système indépendant du véhicule comme une application smartphone puisqu'elle ne nécessite en entrée qu'une mesure GPS.
- Respect du temps de parcours (à iso distance parcourue) : les polluants sont minimisés sans augmenter la durée du trajet.

**Exemples**

L'exemple d'application décrit ci-après concerne une application du procédé selon l'invention à un véhicule ayant un moteur diesel turbocompressés avec une réduction catalytique sélective ("Sélective Catalytic Réduction" en anglais).

Le procédé selon l'invention est appliqué selon la troisième variante principale de l'invention décrite ci-dessus, c'est-à-dire que l'on détermine a posteriori un profil de vitesse minimisant les émissions de polluants.

Quatre déplacements sont considérés, qui diffèrent par leurs durées, leurs distances et les contraintes de conduite (pentes, feux tricolores, limitations de vitesse etc ). Ces déplacements sont notés par la suite D1, D2, D3, et D4.

On mesure un profil de vitesse réalisé par un usager pour chacun de ces déplacements, et on détermine en outre notamment les émissions de NOx associées à ce profil de vitesse au moyen du modèle analytique décrit en section A.2) ci-dessus. Les profils de vitesse de l'usager pour chacun de ces déplacements D1 à D4 sont représentés par les courbes notées H en Figure 1.

A des fins de comparaison, on applique par ailleurs à ces déplacements la méthode d'éco-conduite décrite dans le document FR 2 994 923 A1 visant à déterminer un profil de vitesse minimisant la consommation énergétique. Les profils de vitesse selon l'art antérieur (c'est-à-dire minimisant la consommation énergétique) pour chacun de ces déplacements D1 à D4 sont représentés par les courbes notées G en Figure 1. On détermine également les émissions notamment de NOx associées à ces profils de vitesse au moyen d'un modèle analytique décrit en section A.2) ci-dessus.

Le procédé selon l'invention est appliqué en définissant trois modèles de profils de vitesse correspondants aux trois modes de réalisation décrits en section A.4) ci-dessus, et ce pour chacun des quatre déplacements D1 à D4. Comme la durée des déplacements réalisés par l'usager et la durée des déplacements déterminés par le procédé selon l'art antérieur diffèrent, et que le procédé selon la troisième variante principale de l'invention est appliqué en préservant le temps de trajet total du déplacement, le procédé selon l'invention est appliqué deux fois : de façon à minimiser les émissions polluantes des déplacements D1 à D4 réalisés par l'usager, et de façon à minimiser les émissions polluantes des déplacements D1 à D4 optimisés selon l'art antérieur vis-à-vis de la consommation énergétique uniquement. Les profils de vitesse déterminés par le procédé selon l'invention pour les quatre déplacements réalisés par l'usager et pour les quatre déplacements résultants du procédé selon l'art antérieur sont représentés respectivement par les courbes INVH et INVG en Figure 1. On détermine également les émissions, notamment de NOx, associées à ces profils de vitesse au moyen du modèle analytique décrit en section A.2) ci-dessus.

On peut observer que, quel que soit le déplacement D1, D2, D3 ou D4, les profils de vitesse issus du procédé selon l'invention (courbes INVH et INVG) sont caractérisés par des accélérations moins fortes au démarrage, et ont tendance à se stabiliser autour d'une vitesse moyenne inférieure à celles des profils de vitesse de l'usager (courbe H) ou issus du procédé selon l'art antérieur (courbe G). Egalement, on peut observer que les profils de vitesse de l'usager ou issus du procédé selon l'art antérieur n'exploitent pas la conduite en roue libre, contrairement aux profils de vitesse déterminés par le procédé selon l'invention.

Par ailleurs, la modélisation des émissions pour chacun de ces profils permet de conclure qu' une réduction de l'ordre de 34% des émissions de NOx est obtenue avec le procédé selon l'invention en la comparant à la conduite réalisée par un usager, et de l'ordre de 31% en moyenne en la comparant au profil de vitesse selon l'art antérieur. Une réduction des émissions de $CO_2$ du même ordre de grandeur est également observée.

Ainsi, la présente invention permet de déterminer un profil de vitesse d'un véhicule optimisé pour réduire les polluants atmosphériques (comme les NOx), tout en respectant le temps de parcours. Elle permet donc de réduire les impacts environnementaux, sans allonger le temps de parcours. Dans un contexte d'éco-conduite, le profil de vitesse optimal, qui peut minimiser un compromis entre différents polluants, peut être communiqué au conducteur du véhicule en temps réel. Dans le cas des véhicules autonomes, le véhicule peut être piloté en fonction du profil de vitesse optimisé selon l'invention.

**Revendications**

1. Procédé pour déterminer un profil de vitesse (INVG, INVH) permettant de minimiser les émissions

   d'au moins un polluant générées par un véhicule au cours d'un déplacement, ledit procédé étant mis en oeuvre à partir au moins de :

   i. un modèle de la dynamique dudit véhicule fonction au moins d'une accélération de traction dudit véhicule ;
   ii. un modèle analytique représentatif du débit desdites émissions dudit au moins un polluant en sortie dudit véhicule, ledit modèle analytique étant fonction de la vitesse et de ladite accélération de traction dudit véhicule ;
   iii. au moins un modèle de profil de vitesse décomposé en au moins deux phases, chacune desdites phases dudit modèle de profil de vitesse correspondant à un mode d'accélération dudit véhicule,

   **caractérisé en ce que** le nombre desdits modes d'accélération valant cinq, un mode d'accélération dudit véhicule étant défini par une fonction analytique dépendant de la vitesse instantanée dudit véhicule et/ou de paramètres dudit véhicule, lesdits modes d'accélération dudit véhicule étant choisis parmi : une accélération de traction nulle, une accélération de traction maximale d'un fonctionnement basse émission de polluants dudit moteur dudit véhicule, une accélération de traction égale aux efforts résistifs, une accélération de traction correspondant au freinage maximal dudit véhicule, une accélération de traction maximale dudit véhicule ;
   et **en ce qu'**on réalise au moins les étapes suivantes, à partir au moins d'une information sur la destination du véhicule :

   a) On mesure la position et la vitesse instantanée du véhicule pour au moins un pas de temps pendant ledit déplacement dudit véhicule
   b) On détermine au moins la longueur, la durée, la vitesse initiale et la vitesse finale dudit véhicule pour au moins une portion dudit déplacement, à partir au moins de ladite information sur ladite destination dudit véhicule, de ladite mesure de ladite position dudit véhicule et de ladite vitesse instantanée dudit véhicule ;
   c) On détermine un profil de vitesse minimisant lesdites émissions d'au moins un polluant pour au moins une portion dudit déplacement de la manière suivante :

   - pour chaque modèle de profil de vitesse, on définit une pluralité de profils de vitesse respectant ladite distance, ladite durée, ladite vitesse initiale et ladite vitesse finale de ladite portion dudit déplacement, lesdits profils de vitesse se distinguant par des durées de chacune desdites phases dudit profil de vitesse distinctes, et on détermine lesdites émissions dudit au moins polluant pour chacun desdits profils de vitesse de ladite pluralité de profils de vitesse au moyen dudit modèle analytique
   - on sélectionne ledit profil de vitesse minimisant lesdites émissions d'au moins un polluant déterminées pour chacun des profils de vitesse de chacune desdites pluralités de profils de vitesse définis pour chacun desdits modèles de profils de vitesse.

2. Procédé selon la revendication 1, dans lequel l'un desdits modèles de profil de vitesse est décomposé en quatre phases comportant lesdits modes d'accélération successifs suivants : une accélération de traction maximale d'un fonctionnement basse émission de polluants dudit moteur dudit véhicule, une accélération de traction égale aux efforts résistifs, une accélération de traction nulle, une accélération de traction correspondant au freinage maximal du véhicule.

3. Procédé selon la revendication 1, dans lequel l'un desdits modèles de profil de vitesse est décomposé en cinq phases comportant les modes d'accélération successifs suivants : une accélération de traction maximale d'un fonctionnement basse émission de polluants dudit moteur dudit véhicule, une accélération de traction égale aux efforts résistifs, une accélération de traction maximale d'un fonctionnement basse émission de polluants dudit moteur dudit véhicule, une accélération de traction égale aux efforts résistifs, une accélération de traction nulle.

4. Procédé selon la revendication 1, dans lequel l'un desdits modèles de profil de vitesse est décomposé en cinq phases comportant les modes d'accélération successifs suivants : une accélération de traction maximale du véhicule, une accélération de traction maximale d'un fonctionnement basse émission de polluants dudit moteur dudit véhicule, une accélération de traction égale aux efforts résistifs, une accélération de traction nulle, une accélération de traction correspondant au freinage maximal du véhicule.

5. Procédé selon l'une des revendications précédentes, dans lequel ledit procédé est mis en oeuvre en temps réel et ladite portion dudit déplacement correspond à une partie dudit déplacement non encore effectuée par ledit véhicule.

6. Procédé selon la revendication 5, dans lequel on affiche en outre, à l'issue de l'étape c), ledit profil de vitesse minimisant lesdites émissions d'au moins un desdits polluants et/ou on commande ledit véhicule en fonction dudit profil de vitesse minimisant lesdites émissions d'au moins un desdits polluants.

7. Procédé selon l'une des revendications 1 à 4, dans lequel ladite portion dudit déplacement a déjà été effectuée par ledit véhicule, et dans lequel à partir de ladite mesure de ladite vitesse et de ladite localisation dudit véhicule pendant ladite portion dudit déplacement, on détermine un profil de vitesse réalisé par ledit véhicule, et on détermine un indicateur quantifiant un écart entre ledit profil de vitesse minimisant lesdites émissions dudit au moins un polluant et ledit profil de vitesse réalisé par ledit véhicule.

## Patentansprüche

1. Verfahren zum Bestimmen eines Geschwindigkeitsprofils (INVG, INVH), das es ermöglicht, die von einem Fahrzeug während einer Fahrt erzeugten Emissionen mindestens eines Schadstoffs zu minimieren, wobei das Verfahren durchgeführt wird ausgehend von mindestens:

   i. einem Modell der Dynamik des Fahrzeugs, das mindestens von einer Antriebsbeschleunigung des Fahrzeugs abhängig ist;
   ii. einem analytischen Modell, das für den Ausstoß der Emissionen des mindestens einen Schadstoffs aus dem Fahrzeug repräsentativ ist, wobei das analytische Modell von der Geschwindigkeit und von der Antriebsbeschleunigung des Fahrzeugs abhängig ist;
   iii. mindestens einem Geschwindigkeitsprofilmodell, das in mindestens zwei Phasen zerlegt ist, wobei jede der Phasen des Geschwindigkeitsprofilmodells einem Beschleunigungsmodus des Fahrzeugs entspricht,

   **dadurch gekennzeichnet, dass** die Anzahl der Beschleunigungsmodi gleich fünf ist, wobei ein Beschleunigungsmodus des Fahrzeugs durch eine analytische Funktion definiert ist, die von der momentanen Geschwindigkeit des Fahrzeugs und/oder von Parametern des Fahrzeugs abhängt, wobei die Beschleunigungsmodi des Fahrzeugs gewählt sind unter:

   einer Antriebsbeschleunigung von null, einer maximalen Antriebsbeschleunigung eines schadstoffemissionsarmen Betriebs des Motors des Fahrzeugs, einer Antriebsbeschleunigung gleich den Widerstandskräften, einer Antriebsbeschleunigung, die der maximalen Bremsung des Fahrzeugs entspricht, einer maximalen Antriebsbeschleunigung des Fahrzeugs;
   und dadurch, dass mindestens die folgenden Schritte ausgehend von mindestens einer Information über das Ziel des Fahrzeugs ausgeführt werden:

   a) man misst die Position und die momentane Geschwindigkeit des Fahrzeugs für mindestens einen Zeitschritt während der Fahrt des Fahrzeugs
   b) man bestimmt mindestens die Länge, die Dauer, die Ausgangsgeschwindigkeit und die Endgeschwindigkeit des Fahrzeugs für mindestens einen Abschnitt der Fahrt ausgehend mindestens von der Information über das Ziel des Fahrzeugs, der Messung der Position des Fahrzeugs und der momentanen Geschwindigkeit des Fahrzeugs;
   c) man bestimmt ein Geschwindigkeitsprofil, das die Emissionen mindestens eines Schadstoffs für mindestens einen Abschnitt der Fahrt minimiert, auf die folgende Weise:

- man definiert für jedes Geschwindigkeitsprofilmodell eine Mehrzahl von Geschwindigkeitsprofilen, die die Entfernung, die Dauer, die Ausgangsgeschwindigkeit und die Endgeschwindigkeit des Abschnitts der Fahrt erfüllen, wobei sich die Geschwindigkeitsprofile durch unterschiedliche Dauern jeder der Phasen des Geschwindigkeitsprofils unterscheiden, und man bestimmt die Emissionen des mindestens einen Schadstoffs für jedes der Geschwindigkeitsprofile der Mehrzahl von Geschwindigkeitsprofilen mittels des analytischen Modells;
- man wählt das Geschwindigkeitsprofil, das die Emissionen mindestens eines Schadstoffs minimiert, die für jedes der Geschwindigkeitsprofile jeder der Mehrzahlen von Geschwindigkeitsprofilen bestimmt wurden, die für jedes der Geschwindigkeitsprofilmodelle definiert wurden.

2. Verfahren nach Anspruch 1, bei dem eines der Geschwindigkeitsprofilmodelle in vier Phasen zerlegt ist, die die folgenden aufeinander folgenden Beschleunigungsmodi enthalten: eine maximale Antriebsbeschleunigung eines schadstoffemissionsarmen Betriebs des Motors des Fahrzeugs, eine Antriebsbeschleunigung gleich den Widerstandskräften, eine Antriebsbeschleunigung von null, eine Antriebsbeschleunigung, die der maximalen Bremsung des Fahrzeugs entspricht.

3. Verfahren nach Anspruch 1, bei dem eines der Geschwindigkeitsprofilmodelle in fünf Phasen zerlegt ist, die die folgenden aufeinander folgenden Beschleunigungsmodi enthalten: eine maximale Antriebsbeschleunigung eines schadstoffemissionsarmen Betriebs des Motors des Fahrzeugs, eine Antriebsbeschleunigung gleich den Widerstandskräften, eine maximale Antriebsbeschleunigung eines schadstoffemissionsarmen Betriebs des Motors des Fahrzeugs, eine Antriebsbeschleunigung gleich den Widerstandskräften, eine Antriebsbeschleunigung von null.

4. Verfahren nach Anspruch 1, bei dem eines der Geschwindigkeitsprofilmodelle in fünf Phasen zerlegt ist, die die folgenden aufeinander folgenden Beschleunigungsmodi enthalten: eine maximale Antriebsbeschleunigung des Fahrzeugs, eine maximale Antriebsbeschleunigung eines schadstoffemissionsarmen Betriebs des Motors des Fahrzeugs, eine Antriebsbeschleunigung gleich den Widerstandskräften, eine Antriebsbeschleunigung von null, eine Antriebsbeschleunigung, die der maximalen Bremsung des Fahrzeugs entspricht.

5. Verfahren nach einem der vorhergehenden Ansprüche, wobei das Verfahren in Echtzeit ausgeführt wird und der Abschnitt der Fahrt einem von dem Fahrzeug noch nicht zurückgelegten Teil der Fahrt entspricht.

6. Verfahren nach Anspruch 5, wobei man ferner, am Ende des Schritts c), das Geschwindigkeitsprofil anzeigt, das die Emissionen mindestens eines der Schadstoffe minimiert, und/oder man das Fahrzeug in Abhängigkeit von dem Geschwindigkeitsprofil steuert, das die Emissionen mindestens eines der Schadstoffe minimiert.

7. Verfahren nach einem der Ansprüche 1 bis 4, wobei der Abschnitt der Fahrt von dem Fahrzeug bereits zurückgelegt wurde und wobei man ausgehend von der Messung der Geschwindigkeit und von der Lokalisation des Fahrzeugs während des Abschnitts der Fahrt ein von dem Fahrzeug ausgeführtes Geschwindigkeitsprofil bestimmt und man einen Indikator bestimmt, der eine Abweichung zwischen dem Geschwindigkeitsprofil, das die Emissionen des mindestens einen Schadstoffs minimiert, und dem von dem Fahrzeug ausgeführten Geschwindigkeitsprofil quantifiziert.

**Claims**

1. Method for determining a speed profile (INVG, INVH) making it possible to minimize the emissions of at least one pollutant that are generated by a vehicle during a journey, said method being implemented on the basis of at least:

   i. a model of the dynamics of said vehicle as a function of at least one traction acceleration of said vehicle;
   ii. an analytical model representative of the flow rate of said emissions of said at least one pollutant at the outlet of said vehicle, said analytical model being a function of the speed and said traction acceleration of said vehicle;
   iii. at least one speed profile model divided into at least two phases, each of said phases of said speed profile model corresponding to an acceleration mode of said vehicle,
   **characterized in that** the number of said acceleration modes is five, an acceleration mode of said vehicle is defined by an analytical function depending on the instantaneous speed of said vehicle and/or parameters of said vehicle, said acceleration modes of said vehicle are selected from: zero traction acceleration, maximum traction acceleration of low pollutant emission operation of said engine of said vehicle, traction acceleration equal to the resistive forces, traction acceleration corresponding to the maximum braking of said vehicle, maximum traction acceleration of said vehicle;
and **in that** at least the following steps are carried out, on the basis of at least one item of information regarding the destination of the vehicle:

    a) measuring the position and instantaneous speed of the vehicle for at least one time period during said journey of said vehicle;
    b) determining at least the length, duration, initial speed and final speed of said vehicle for at least a portion of said journey, on the basis of at least said information regarding said destination of said vehicle, said measurement of said position of said vehicle and said instantaneous speed of said vehicle;
    c) determining a speed profile minimizing said emissions of at least one pollutant for at least a portion of said journey, as follows:

        - for each speed profile model, defining a plurality of speed profiles respecting said distance, said duration, said initial speed and said final speed of said portion of said journey, said speed profiles being distinguished by durations of each of said distinct phases of said speed profile, and determining said emissions of said at least one pollutant for each of said speed profiles of said plurality of speed profiles by means of said analytical model;
        - selecting said speed profile minimizing said emissions of at least one pollutant determined for each of the speed profiles of each of said pluralities of speed profiles defined for each of said speed profile models.

2. Method according to Claim 1, wherein one of said speed profile models is divided into four phases having said following successive acceleration modes: maximum traction acceleration of low pollutant emission operation of said engine of said vehicle, traction acceleration equal to the resistive forces, zero traction acceleration, traction acceleration corresponding to the maximum braking of the vehicle.

3. Method according to Claim 1, wherein one of said speed profile models is divided into five phases having the following successive acceleration modes: maximum traction acceleration of low pollutant emission operation of said engine of said vehicle, traction acceleration equal to the resistive forces, maximum traction acceleration of low pollutant emission operation of said engine of said vehicle, traction acceleration equal to the resistive forces, zero traction acceleration.

4. Method according to Claim 1, wherein one of said speed profile models is divided into five phases having the following successive acceleration modes: maximum traction acceleration of the vehicle, maximum traction acceleration of low pollutant emission operation of said engine of said vehicle, traction acceleration equal to the resistive forces, zero traction acceleration, traction acceleration corresponding to the maximum braking of the vehicle.

5. Method according to one of the preceding claims, wherein said method is performed in real time and said portion of said journey corresponds to a part of said journey that has not yet been made by said vehicle.

6. Method according to Claim 5, wherein, furthermore, at the end of step c), said speed profile minimizing said emissions of at least one of said pollutants is displayed and/or said vehicle is controlled as a function of said speed profile minimizing said emissions of at least one of said pollutants.

7. Method according to one of Claims 1 to 4, wherein said portion of said journey has already been performed by said vehicle, and wherein a speed profile realized by said vehicle is determined on the basis of said measurement of said speed and said location of said vehicle during said portion of said journey, and an indicator quantifying a deviation between said speed profile minimizing said emissions of said at least one pollutant and said speed profile realized by said vehicle is determined.

[Fig 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2994923 A1
- US 2015057906 A1
- BE 1019390 A1
- CN 105539448 A
- FR 3049653 A1
- WO 20170510026 A1
- FR 2984557
- US 20130158967 A
- EP 3440330 A1
- EP 3453583 A1

**Littérature non-brevet citée dans la description**

- **HUANG ; YUHAN et al.** Eco-driving technology for sustainable road transport: A review. *Renewable and Sustainable Energy Reviews,* 2018, vol. 93, 596-609
- **MENSING ; FÉLICITAS et al.** Eco-driving: An économie or ecologic driving style?. *Transportation Research Part C: Emerging Technologies,* 2014, vol. 38, 110-121
- **JOHANSSON ; HAKAN et al.** Impact of EcoDriving on émissions. *International Scientific Symposium on Transport and Air Pollution, Avignon, France,* 2003
- **LIU ; JUN ; K. KOCKELMAN ; AQSHEMS NICHOLS.** Anticipating the émissions impacts of smoother driving by connected and autonomous vehicles, using the moves model. *Transportation Research Board 96th Annual Meeting,* 2017
- **STERN ; RAPHAEL E. et al.** Quantifying air quality benefits resulting from few autonomous vehicles stabilizing traffic. *Transportation Research Part D: Transport and Environment,* 2019, vol. 67, 351-365
- **THIBAULT, L. ; DEGEILH, P. ; LEPREUX, O. ; VOISE, L. ; ALIX, G. ; CORDE, G.** A new GPS-based method to estimate real driving émissions. *IEEE 19th International Conférence on Intelligent Transportation Systems (ITSC),* 2016, 1628-1633